# EUROPEAN PATENT SPECIFICATION

(11) **EP 2 522 125 B1**
(45) Date of publication and mention of the grant of the patent: **19.03.2014**
(21) Application number: 11700887.0
(22) Date of filing: 03.01.2011
(51) Int. Cl.: H04M 11/06

(54) **METHOD, SYSTEM, COMMUNICATIONS NETWORK AND COMPUTER PROGRAM PRODUCT FOR TRANSMITTING INFORMATION IN A COMMUNICATIONS NETWORK**
Verfahren, System, Kommunikationsnetzwerk und Computerprogrammprodukt zur Informationsübertragung in einem Kommunikationsnetzwerk
Procédé, système, réseau de communication et produit de programme informatique pour transmission d'information dans un réseau de communications

(30) Priority: 08.01.2010 US 293268 P; 08.01.2010 EP 10000127
(43) Date of publication of application: 14.11.2012
(73) Proprietor: Deutsche Telekom AG, 53113 Bonn (DE)
(72) Inventor: KELLER, Walter, 40880 Ratingen (DE)
(74) Representative: Schwöbel, Thilo K.
(86) International application number: PCT/EP2011/000002
(87) International publication number: WO 2011/083071

(56) References cited:
- WO-A-03/098850
- HONIG M. L., STEIGLITZ K.: "multichannel signal processing for data communications in the presence of crosstalk", IEEE TRANSACTIONS ON COMMUNICATIONS, vol. 38, no. 4, 4 April 1990 (1990-04-04), pages 551-558, XP002571200,
- GEORGE GINIS ET AL: "Vectored Transmission for DigitalSubscriber Line Systems", IEEE JOURNAL ON SELECTED AREAS IN COMMUNICATIONS, IEEE SERVICE CENTER, PISCATAWAY, US, vol. 20, no. 5, 1 June 2002 (2002-06-01), XP011065493, ISSN: 0733-8716

## Description

### BACKGROUND

The present invention relates to a method, a system, a communications network, and a computer program product for transmitting information in a communications network between a central unit on the one hand and a first and second decentralized unit on the other hand via a distribution point.

Currently, users require an always higher data transmission bandwidth when using Digital Subscriber Lines (DSL), e.g. for the transmission of multimedia content such a videos and/or games. In order to realize higher data transmission capacities for subscribers, it is essential to reduce the cable lengths of the cables connecting the subscriber terminal devices with the central units. From the prior art, it is known to install optical fibres from the central units to the distribution points in order to enhance the data transmission capacities (i.e. reduce the cable lengths) or to use port bonding (a plurality of DSL ports are physically provisioned to the end user and the total bandwidth is equal to the sum of all provisioned ports) according to the specifications of ITU G.998.x or G.Bond.

The document XP002571200 (Honig M. L., Steiglitz K.: "multichannel signal processing for data communications in the presence of crosstalk", IEEE Transactions on communications, vol. 38, no. 4, 4 April 1990, pages 551 - 558) discloses a system for multichannel signal processing for data communications in the presence of crosstalk, wherein multichannel adaptive FIR filters are used to cancel near- and far-end crosstalk.

All these methods are comparably costly as either the optical fibres need to be installed or the subscribers need to pay for a plurality of subscriber lines.

### SUMMARY

An object of the present invention is to provide a method, a system, a communications network, and a computer program product for transmitting information in a communications network between a central unit on the one hand and a first and second decentralized unit on the other hand via a distribution point such that transmission bandwidth between the central unit and the decentralized units is enhanced without bearing the costs of providing optical fibers between the central unit and the distribution point.

The object of the present invention is achieved by a method as in claim 1 for transmitting information in a communications network between a central unit on the one hand and a first and second decentralized unit on the other hand via a distribution point, wherein the communications network comprises first and second subscriber lines serving the first and second decentralized unit for the transmission of first data from the central unit to the first decentralized unit and for the transmission of second data from the central unit to the second decentralized unit. According to a first embodiment of the present invention, the method comprises the following steps:
- multiplexing (or splitting) the first data at the central unit on the first and second subscriber lines or on the first subscriber line and an additional subscriber line,
- transmitting the first data from the central unit to the distribution point using the first and second subscriber lines or using the first subscriber line and the additional subscriber line, and
- demultiplexing (or merging) at the distribution point the first data on the first subscriber line for transmission to the first decentralized unit.

According to a second embodiment of the present invention, the method comprises the following steps:
- multiplexing the first and second data at the central unit (on the first and second subscriber lines),
- commonly transmitting the multiplexed first and second data from the central unit to the distribution point using the first and second subscriber lines, and
- demultiplexing at the distribution point the first data on the first subscriber line for transmission to the first decentralized unit and the second data on the second subscriber line for transmission to the second decentralized unit.

Thereby, it is advantageously possible to use the full transmission capacity (or bandwidth) of the subscriber lines present between the central unit and the distribution point to transmit data independent on whether such data concern the first decentralized unit or the second decentralized unit. Usually according to the present invention, a multitude of subscriber lines and decentralized units are present that are served by the central unit, e.g. a few tens of decentralized units or even a few hundreds of decentralized units. According to the present invention, a cable device is located between the central unit and the distribution point, wherein the cable device typically provides 100 or 200 or 500 subscriber lines, which are preferably all used by the method of the present invention to transmit data to and/or from the decentralized units. According to the present invention, the first subscriber line serves the first decentralized unit and the second subscriber line serves the second decentralized unit. The first and/or second subscriber lines are usually each copper double wire but could also be a multitude of copper double wires. The additional subscriber lines (usually also copper double wires) are only used between the central unit and the distribution point. According to the present invention, the sharing of all the subscriber lines between the central unit and the distribution point is at least used for the down link direction, i.e. for the transmission of first data (from the central unit to the first decentralized unit) and for the transmission of second data (from the central unit to the second decentralized unit). According to the present invention, a higher bandwidth is possible to be realized between the central unit and the decentralized unit as usually:
- there are either additional (non-used) subscriber lines present between the central unit and the distribution point that can be used for transmitting the first data and the second data separately (according to the first embodiment of the present invention), or
- the decentralized units do not need the full transmission capacity of their respective subscriber line at any time and therefore, it is possible to use the available capacity of the first and the second subscriber line for a common transmission of the first and second data (according to the second embodiment of the present invention). This is also called statistical multiplex. The present invention provides for a sharing of the transmission capacity on a part of the distance between the central unit and the decentralized unit, namely between the central unit and the distribution point.

According to the present invention, it is preferred that the first and second subscriber lines serve the first and second decentralized unit for the transmission of third data from the first decentralized unit to the central unit and for the transmission of fourth data from the second decentralized unit to the central unit, comprising the steps of either:
- multiplexing (or splitting) the third data at the distribution point on the first and second subscriber lines or on the first subscriber line and on an additional subscriber line,
- transmitting the third data from the distribution point to the central unit using the first and second subscriber lines or on the first subscriber line and on the additional subscriber line, and
- demultiplexing (or merging) the third data at the central unit
   or
- multiplexing the third and fourth data at the distribution point on the first and second subscriber lines,
- commonly transmitting the multiplexed third and fourth data from the distribution point to the central unit using the first and second subscriber lines, and
- demultiplexing the third and fourth data at the central unit.

Thereby, it is advantageously possible according to the present invention to provide for a sharing of the resources between the central unit and the distribution point also for the data transmission in the upload direction, i.e. from the decentralized unit towards the central unit. Again, it is possible according to the present invention
- that the third data are transmitted separately from the fourth data on the first and second subscriber line or on the first subscriber line and on the additional subscriber line, or
- that the third data and the fourth data are transmitted commonly on the first and second subscriber line.

According to the present invention, it is possible to combine:
- a common transmission of the first and second data (downlink direction) with a common transmission of the third and fourth data (uplink direction), or
- a common transmission of the first and second data (downlink direction) with a separate transmission of the third and fourth data (uplink direction), or
- a separate transmission of the first and second data (downlink direction) with a common transmission of the third and fourth data (uplink direction), or
- a separate transmission of the first and second data (downlink direction) with a separate transmission of the third and fourth data (uplink direction).

According to the present invention, it is furthermore preferred that for the common transmission of the first and second data from the central unit to the distribution point, a maximum bandwidth is assigned to the first data corresponding to the transmission capacity of the first subscriber line between the distribution point and the first decentralized unit and/or
wherein for the common transmission of the third and fourth data from the distribution point to the central unit, a maximum bandwidth is assigned to the third data corresponding to the transmission capacity of the first subscriber line between the distribution point and the first decentralized unit.

It is thereby advantageously possible to provide for a maximum transmission throughput and therefore a maximum quality of service for as many subscribers as possible. If, e.g., the transmission capacity (or bandwidth) between the distribution point and the first decentralized unit (i.e. the subscriber terminal) is limited to 1 Mbaud (e.g. due to the signal attenuation of the copper double line between the distribution point and the first decentralized unit) because of a certain cable length of this line, then the first decentralized unit will at most be allotted 1 Mbaud for the multiplexed part of the transmission line between the central unit and the decentralized unit.

According to a further preferred embodiment of the present invention, at least one additional subscriber line is used between the central unit and the distribution point for commonly transmitting the first and second data and/or the third and fourth data. The use of such additional subscriber lines that are at least not in use for broad band transmission makes it possible to further enhance the transmission bandwidth on the multiplexed part of the transmission line between the central unit and the decentralized unit.

Furthermore, it is preferred according to the present invention that the first, second, third and fourth data comprise each a narrow band portion, wherein at least one of the narrow band portions are transmitted on the first or second subscriber line or on the at least one additional subscriber line.

According to the present invention, it is possible to transmit the narrow band signal of the decentralized units either on their dedicated subscriber line or it is alternatively also possible to transmit these data on a different subscriber line.

According to a further preferred embodiment of the present invention, the common or separate transmission of the first, second, third and/or fourth data is realized dependent on the attenuation and/or cross talk properties of the first and second subscriber line and/or of the at least one additional subscriber line between the central unit and the distribution point.

Thereby, it is advantageously possible to further enhance the data transmission capacity between the central unit and the distribution point. According to the present invention, is possible to automatically measure (the attenuation and or other electromagnetic properties of the data transmission) one or more of the double cable links between the central unit and the distribution point such that with regard to the attenuation but also with regard to cross-talk an optimised data transmission can be performed.

The present invention also relates to a system as in claim 8 for transmitting information, especially in a communications network, between a central unit on the one hand and a first and second decentralized unit on the other hand via a distribution point, wherein the system uses first and second subscriber lines serving the first and second decentralized unit for the transmission of first data from the central unit to the first decentralized unit, wherein the system comprises a first multiplex unit provided for multiplexing the first data at the central unit on the first and second subscriber lines or on the first subscriber line and on an additional subscriber line, wherein the first data are transmitted from the central unit to the distribution point using the first and second subscriber lines or using the first subscriber line and using the additional subscriber line, and wherein the system comprises a second multiplex unit provided for demultiplexing, at the distribution point, the first data on the first subscriber line for transmission to the first decentralized unit (UE1).

The present invention also relates to a system for transmitting information, especially in a communications network, between a central unit on the one hand and a first and second decentralized unit on the other hand via a distribution point, wherein the system uses first and second subscriber lines serving the first and second decentralized unit for the transmission of first data from the central unit to the first decentralized unit and for the transmission of second data from the central unit to the second decentralized unit, wherein the system comprises a first multiplex unit provided for multiplexing the first and second data at the central unit on the first and second subscriber lines, wherein the first and second data are commonly transmitted from the central unit to the distribution point using the first and second subscriber lines, and wherein the system comprises a second multiplex unit provided for demultiplexing, at the distribution point, the first data on the first subscriber line for transmission to the first decentralized unit (UE1) and the second data on the second subscriber line for transmission to the second decentralized unit (UE2).

According to the present invention, it is preferred that the first and second subscriber lines serve the first and second decentralized unit for the transmission of third data from the first decentralized unit to the central unit, wherein the second multiplex unit is provided for multiplexing the third data at the distribution point on the first and second subscriber lines or on the first subscriber line and on the additional subscriber line, wherein the third data are transmitted from the distribution point to the central unit using the first and second subscriber lines or using the first subscriber line and using the additional subscriber line, and wherein the first multiplex unit is provided for demultiplexing the third data at the central unit.

According to the present invention, it is furthermore preferred that the first and second subscriber lines serve the first and second decentralized unit for the transmission of third data from the first decentralized unit to the central unit and for the transmission of fourth data from the second decentralized unit to the central unit, wherein the second multiplex unit is provided for multiplexing the third and fourth data at the distribution point on the first and second subscriber lines, wherein the third and fourth data are commonly transmitted from the distribution point to the central unit using the first and second subscriber lines, and wherein the first multiplex unit is provided for demultiplexing the third and fourth data at the central unit.

Thereby, it is advantageously possible that a higher bandwidth is realized between the central unit and the decentralized unit as it is usual that the decentralized units do not need the full transmission capacity of their respective subscriber line at any time. The present invention provides for a sharing of the transmission capacity between on a part of the distance between the central unit and the decentralized unit, namely between the central unit and the distribution point.

It is furthermore preferred according to the present invention that the first and second subscriber lines (as well as the additional subscriber line) are provided as pairs of wire lines, especially as pairs of copper wire lines. Thereby, a very cost effective realization of the present invention is possible to achieve.

The present invention also relates to a communications network as in claim 12 comprising a system for transmitting information, especially in a communications network, between a central unit on the one hand and a first and second decentralized unit on the other hand via a distribution point, wherein the system uses first and second subscriber lines serving the first and second decentralized unit for the transmission of first data from the central unit to the first decentralized unit, wherein the system comprises a first multiplex unit provided for multiplexing the first data at the central unit on the first and second subscriber lines or on the first subscriber line and on an additional subscriber line, wherein the first data are transmitted from the central unit to the distribution point using the first and second subscriber lines or using the first subscriber line and using the additional subscriber line, and wherein the system comprises a second multiplex unit provided for demultiplexing, at the distribution point, the first data on the first subscriber line for transmission to the first decentralized unit (UE1).

The present invention also relates to a communications network comprising a system for transmitting information, especially in a communications network, between a central unit on the one hand and a first and second decentralized unit on the other hand via a distribution point, wherein the system uses first and second subscriber lines serving the first and second decentralized unit for the transmission of first data from the central unit to the first decentralized unit and for the transmission of second data from the central unit to the second decentralized unit, wherein the system comprises a first multiplex unit provided for multiplexing the first and second data at the central unit on the first and second subscriber lines, wherein the first and second data are commonly transmitted from the central unit to the distribution point using the first and second subscriber lines, and wherein the system comprises a second multiplex unit provided for demultiplexing, at the distribution point, the first data on the first subscriber line for transmission to the first decentralized unit (UE1) and the second data on the second subscriber line for transmission to the second decentralized unit (UE2).

Furthermore, the present invention relates to
- a program comprising a computer readable program code for transmitting information in a communications network between a central unit on the one hand and a first and second decentralized unit on the other hand via a distribution point according to the present invention or for controlling a communications network according to the present invention, and to
- a computer program product comprising a computer readable software code that when executed on a computing system performs a method for transmitting information in a communications network between a central unit on the one hand and a first and second decentralized unit on the other hand via a distribution point according to the present invention.

### BRIEF DESCRIPTION OF THE DRAWINGS

Figure 1 schematically illustrates a part of a communications network comprising a central unit and a plurality of decentralized units (subscriber terminals).
Figure 2 schematically illustrates a more detailed representation of the connection between a central unit and a plurality of decentralized units according to the prior art.
Figure 3 schematically illustrates a more detailed representation of the connection between a central unit and a plurality of decentralized units according to the present invention.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described of illustrated herein.

The techniques described herein may be implemented by various means. For example, these techniques may be implemented in hardware (one or more devices), firmware (one or more devices), software (one or more modules), or combinations thereof. For a firmware or software, implementation can be through modules (for example, procedures, functions, or the like) that perform the functions described herein. The software codes may be stored in any suitable, processor/computer-readable data storage medium(s) or memory unit(s) and executed by one or more processors/computers. The data storage medium or the memory unit may be implemented within the processor/computer or external to the processor/computer, in which case it can be communicatively coupled to the processor/computer via various means as is known in the art. Additionally, components of systems described herein may be rearranged and/or complimented by additional components in order to facilitate achieving the various aspects, goals, advantages, etc., described with regard thereto, and are not limited to the precise configurations set forth in a given figure, as will be appreciated by one skilled in the art.

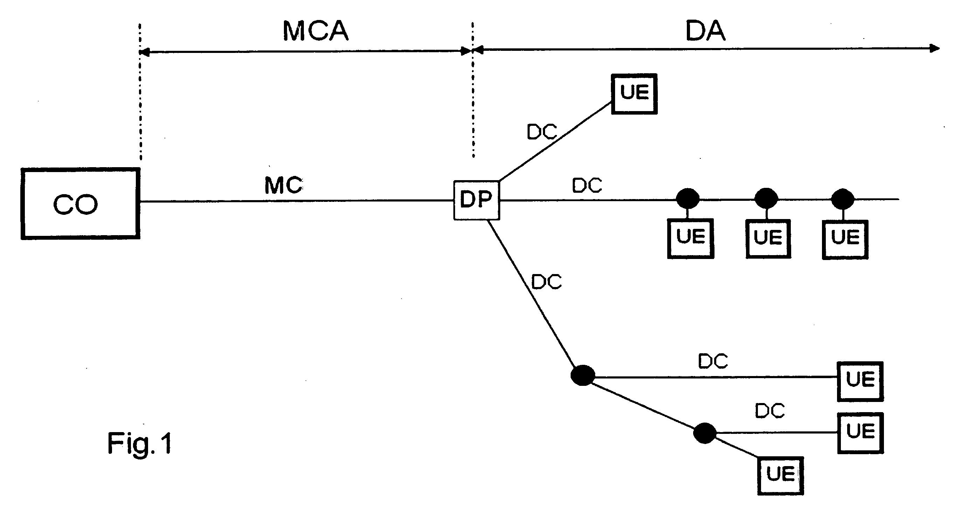

In Figure 1, a part of a communications network 10 comprising a central unit (central office, CO) and a plurality of decentralized units (also called User Equipment (UE) or subscriber terminals) is schematically represented. The central unit CO (also called central office) is part of an analog or digital communications network 10 like the Public Switched Telephone Network (PSTN) or the Integrated Services Digital Network (ISDN). The subscribers or decentralized units UE are connected to the central unit CO by means of subscriber lines. Such subscriber lines have usually a length of up to about 8000 meters (resulting from the attenuation requirements for signal transmission in a narrow band frequency range of about 300 Hz to 3400 Hz (adapted to analog telephony services). Usually, the subscriber lines for a plurality of subscribers or decentralized units UE are routed commonly from the central unit CO to a distribution point DP via a main cable MC. The main cable MC is usually used to route a plurality of dedicated subscriber lines over a distance of, e.g., a few kilometres, for example to a suburb or the like to the distribution point DP. From the distribution point DP the subscriber lines are routed by means of distribution cables DC to the individual decentralized units UE or subscriber terminals.

As far as broad band data transmission is concerned, the transmission capacity (or bandwidth) of the subscriber lines between the central unit CO and the decentralized units UE strongly depends, besides other parameters such as cross talk between different pairs of cables, primarily on the length of the cable. E.g., a cable length of 5 kilometres or more results in a data transmission capacity in the range of a few hundreds of kBaud, a cable length of 3 km results in at most 6 MBaud and a cable length of at most a few hundreds of meters required for data transmission capacities of 16 MBaud.

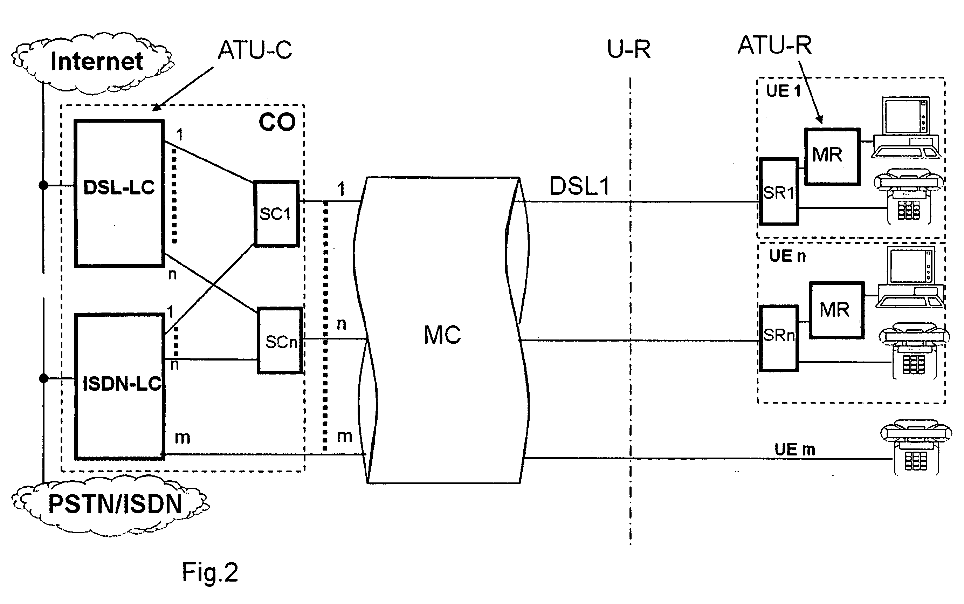

In Figure 2, a more detailed representation of the connection according to the prior art between a central unit CO and a plurality of decentralized units UE is schematically illustrated. The central unit CO usually comprises a narrow band component (ISDN-LC, Integrated Services Digital Network Line Card) and a broad band component (DSL-LC, Digital Subscriber Line Line Card). The narrow band component (ISDN-LC, Integrated Services Digital Network Line Card) comprises usually narrow band analog interfaces (a/b interface) and/or narrow band digital interfaces Uₖ₀ for the connection of the subscriber lines to the analog Public Switched Telephone Network (PSTN) or the digital Integrated Services Digital Network (ISDN). The broad band component (DSL-LC, Digital Subscriber Liner Line Card) is usually part of a Digital Subscriber Line Area Multiplexer (DSLAM) that provides towards the decentralized units a plurality of Digital Subscriber Line (DSL) lines. Usually, the decentralized units are connected to the subscriber lines by means of a modem device and/or by means of a router device. This is designated by means of reference sign MR.

Usually by means of a splitter device SM1, SM2, both the narrow band signal and the broad band signal for a specific decentralized unit UE are brought together on the corresponding subscriber line that is routed to the subscriber terminal. At the subscriber terminal end of the subscriber line, the broad band signal and the narrow band signal are again separated by a splitter device. The designations ATU-C, ATU-R and U-R refer to the ITU-T (International Telecommunication Union Telecommunication Standardization Sector) reference points of such a Digital Subscriber Line connection.

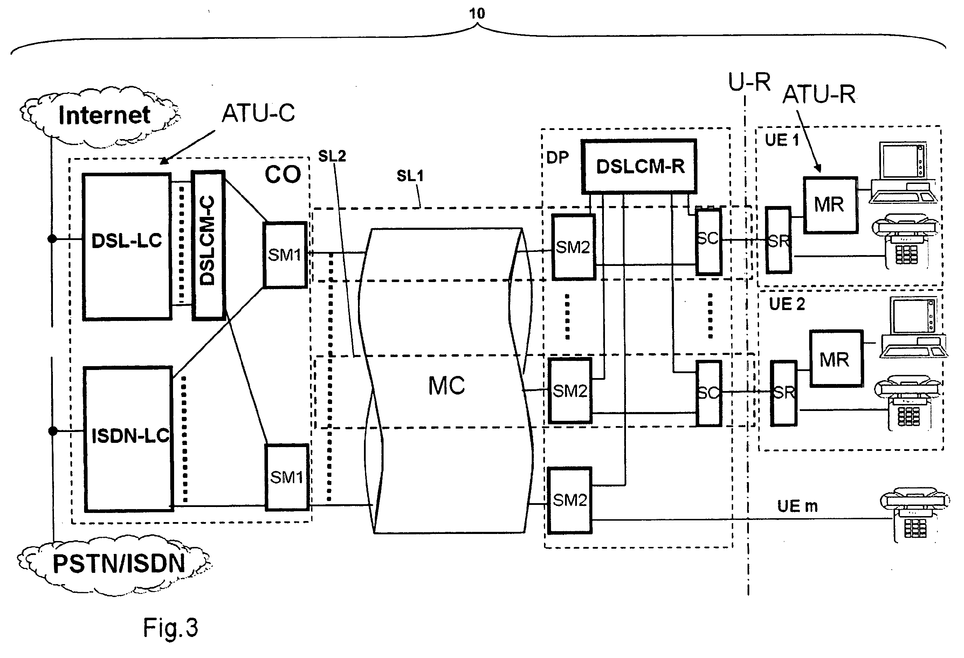

In Figure 3, a more detailed representation of the connection according to the present invention between a central unit CO and a first decentralized unit UE1 and a second decentralized unit UE2 is schematically illustrated. Again, the central unit CO comprises a narrow band component (ISDN-LC, Integrated Services Digital Network Line Card) and a broad band component (DSL-LC, Digital Subscriber Line Line Card). The narrow band component (ISDN-LC, Integrated Services Digital Network Line Card) comprises usually narrow band analog interfaces (a/b interface) and/or narrow band digital interfaces Uₖ₀ for the connection of the subscriber lines to the analog Public Switched Telephone Network (PSTN) or the digital Integrated Services Digital Network (ISDN). The broad band component (DSL-LC, Digital Subscriber Liner Line Card) is part of a Digital Subscriber Line Area Multiplexer (DSLAM) that provides towards the decentralized units a plurality of Digital Subscriber Line (DSL) lines. Both components can also be realized on a universal line card.

According to the present invention, between the central unit CO and the distribution point DP, the narrow band signal and the broad band signal for a specific decentralized unit UE1, UE2 is not necessarily transmitted on the same subscriber line.

The broad band signal is transmitted using a plurality of subscriber lines between the central unit CO and the distribution point DP. Hereinafter, the term of first data is used for data intended to be transmitted to the first decentralized unit UE1 in the downlink direction. Hereinafter, the term of second data is used for data intended to be transmitted to the second decentralized unit UE2 in the downlink direction. Hereinafter, the term of third data is used for data intended to be transmitted from the first decentralized unit UE1 in the uplink direction. Hereinafter, the term of fourth data is used for data intended to be transmitted from the second decentralized unit UE2 in the uplink direction. According to the present invention, the transmission of the first and second data can either be realized separately (first embodiment) or commonly (second embodiment).

In case of a separate transmission of the first and second data, e.g. the following options can be realized for the transmission of the first data:
- using the first subscriber line and the second subscriber line, or
- using the first subscriber line and an additional subscriber line, and, e.g., the following options can be realized for the transmission of the second data:
- using the second subscriber line and a further additional subscriber line, or
- using the first subscriber line and the second subscriber line.

In case of a common transmission of the first and second data, e.g. the following options can be realized for the transmission of the first and second data:
- using the first and second subscriber line, or
- using the first and second subscriber line and one additional subscriber line or more additional subscriber lines.

According to the present invention, such a data transmission is possible without reducing the possible data transmission bandwidth because usually not all decentralized units require a comparably high data transmission at the same time. The decentralized units UE1, UE2 are connected to the subscriber lines by means of a modem device and/or by means of a router device. This is designated by means of reference sign MR.

According to the present invention, the central unit CO provides for a Digital Subscriber Line Cable Multiplexer (DSLCM-C) at the ATU-C reference point. Such a Digital Subscriber Line Cable Multiplexer (DSLCM-C) is able to split data intended for a transmission to the first decentralized unit UE1 via a first subscriber line SL1 and via a second subscriber line SL2. Such data are hereinafter also called first data. The Digital Subscriber Line Cable Multiplexer (DSLCM-C) is also able to split data intended for a transmission to the second decentralized unit UE2 via the first subscriber line SL1 and via the second subscriber line SL2. Such data are hereinafter also called second data. At the distribution point DP, a Digital Subscriber Line Cable Multiplexer (DSLCM-R) is used according to the present invention. The Digital Subscriber Line Cable Multiplexer (DSLCM-R) at the distribution point DP merges the first data from the various subscriber lines SL1, SL2 to transmit the first data via a distribution cable DC to the first decentralized unit UE1. Furthermore, the Digital Subscriber Line Cable Multiplexer (DSLCM-R) at the distribution point DP merges the second data from the various subscriber lines SL1, SL2 to transmit the second data via a distribution cable DC to the second decentralized unit UE2. The first subscriber line SL1 and the second subscriber line SL2 are at least partly separated between the distribution point DP and the first/second decentralized unit UE1/UE2 (due to the fact that the first decentralized unit UE1 and the second decentralized unit UE2 are located at different locations). In most cases, the decentralized units UE1, UE2 will be connected by means of only a copper double wire, i.e. the first subscriber line SL1 and the second subscriber line SL2 correspond to a copper double wire, respectively.

Due to the fact that the residual distribution cable from the distribution point DP to the first and second decentralized unit UE1, UE2 is much shorter than the complete distance between the central unit CO and the first and second decentralized unit UE1, UE2, a much higher transmission rate (bandwidth) is possible to transmit on the residual subscriber line between the distribution point DP and the first / second decentralized unit UE1, UE2 without the need to install a Digital Subscriber Line Area Multiplexer (DSLAM) in every distribution point DP and the need to install an additional high bandwidth connection such as an optical fibre to such a Digital Subscriber Line Area Multiplexer (DSLAM) in every distribution point DP.

In order to further enhance the data transmission capacity of the connection between the central unit CO and the first and second decentralized unit UE1, UE2, it is preferred according to the present invention to use additional subscriber lines that are present in the main cable between the central unit CO and the distribution point DP but that are not in use by a respective subscriber. Such an additional subscriber line is schematically shown in Figure 3. According to the present invention, both the Digital Subscriber Line Cable Multiplexer (DSLCM-C) in the central unit CO and the Digital Subscriber Line Cable Multiplexer (DSLCM-R) in the distribution point DP should have access to as much subscriber lines between the central unit CO and the distribution point DP as possible.

According to the present invention, the multiplexing and demultiplexing actions of the Digital Subscriber Line Cable Multiplexer (DSLCM-C) in the central unit CO and the Digital Subscriber Line Cable Multiplexer (DSLCM-R) in the distribution point DP are not only performed for the direction from the central unit CO to the decentralized unit UE1, UE2 but also in the opposing direction. This means that the Digital Subscriber Line Cable Multiplexer (DSLCM-R) in the distribution point DP is able to split data intended for a transmission from the first decentralized unit UE1 (to the central unit CO) via the first subscriber line SL1 and via a second subscriber line SL2 (and possibly via the additional subscriber line). Such data are hereinafter also called third data. The Digital Subscriber Line Cable Multiplexer (DSLCM-R) in the distribution point DP is also able to split data intended for a transmission from the second decentralized unit UE2 (to the central unit CO) via the first subscriber line SL1 and via the second subscriber line SL2 (and possibly via the additional subscriber line). Such data are hereinafter also called fourth data. At the central unit CO, the Digital Subscriber Line Cable Multiplexer (DSLCM-C) is used to merge the third data from the various subscriber lines SL1, SL2 and to merge the fourth data from the various subscriber lines SL1, SL2.

According to the present invention, different possibilities for the handling of the narrow band signal is possible. For example, the handling of the narrow band signals is not changed with respect to the prior art, i.e. each subscriber line SL1, SL2 transmits the corresponding narrow band signals (i.e. for the first decentralized unit UE1 on the first subscriber line SL1 and for the second decentralized unit UE2 on the second subscriber line SL2). Otherwise, it is also possible the a plurality of narrow band signals are transmitted on other subscriber lines, e.g. in order to minimize cross-talk effects within the main cable. For separating the narrow band signal from the broad band signal, splitter device SM1, SM2, SC are used. The designations ATU-C, ATU-R and U-R refer to the ITU-T (International Telecommunication Union Telecommunication Standardization Sector) reference points of such a Digital Subscriber Line connection.

## Claims

1. Method for transmitting information in a communications network (10) between a central unit (CO) on the one hand and a first and second decentralized unit (UE1, UE2) on the other hand via a distribution point (DP), wherein the communications network (10) comprises first and second subscriber lines (SL1, SL2) serving the first and second decentralized unit (UE1, UE2) for the transmission of first data from the central unit (CO) to the first decentralized unit (UE1) and for the transmission of second data from the central unit (CO) to the second decentralized unit (UE2), the
- method comprising the following steps:
- - splitting the first data at the central unit (CO),
- - transmitting the first data from the central unit (CO) to the distribution point (DP) using the first and second subscriber lines (SL1, SL2) or using the first subscriber line (SL1) and the additional subscriber line, and
- - merging at the distribution point (DP) the first data on the first subscriber line (SL1) for transmission to the first decentralized unit (UE1).

2. Method according to claim 1, wherein the first and second subscriber lines (SL1, SL2) serve the first and second decentralized unit (UE1, UE2) for the transmission of third data from the first decentralized unit (UE1) to the central unit (CO) and for the transmission of fourth data from the second decentralized unit (UE2) to the central unit (CO), wherein the method further comprises the steps of:
- - splitting the third data at the distribution point (DP),
- - transmitting the third data from the distribution point (DP) to the central unit (CO) using the first and second subscriber lines (SL1, SL2) or using the first subscriber line (SL1) and the additional subscriber line, and
- - merging the third data at the central unit (CO)

3. Method for transmitting information in a communications network (10) between a central unit (CO) on the one hand and a first and second decentralized unit (UE1, UE2) on the other hand via a distribution point (DP), wherein the communications network (10) comprises first and second subscriber lines (SL1, SL2) serving the first and second decentralized unit (UE1, UE2) for the transmission of first data from the central unit (CO) to the first decentralized unit (UE1) and for the transmission of second data from the central unit (CO) to the second decentralized unit (UE2), the
method comprising the following steps:
- - multiplexing the first and second data at the central unit (CO),
- - commonly transmitting the multiplexed first and second data from the central unit (CO) to the distribution point (DP) using the first and second subscriber lines (SL1, SL2), and
- - demultiplexing at the distribution point (DP) the first data for transmission to the first decentralized unit (UE1) and the second data for transmission to the second decentralized unit (UE2).

4. Method according to claim 3, wherein the first and second subscriber lines (SL1, SL2) serve the first and second decentralized unit (UE1, UE2) for the transmission of third data from the first decentralized unit (UE1) to the central unit (CO) and for the transmission of fourth data from the second decentralized unit (UE2) to the central unit (CO), wherein the method further comprises the steps of:
- - multiplexing the third and fourth data at the distribution point (DP) on the first and second subscriber lines (SL1, SL2),
- - commonly transmitting the multiplexed third and fourth data from the distribution point (DP) to the central unit (CO) using the first and second subscriber lines (SL1, SL2), and
- - demultiplexing the third and fourth data at the central unit (CO).

5. Method according to any of the preceding claims, wherein
- - for the transmission of the first data or
- - for the common transmission of the first and second data from the central unit (CO) to the distribution point (DP), a maximum bandwidth is assigned to the first data corresponding to the transmission capacity of the first subscriber line (SL1) between the distribution point (DP) and the first decentralized unit (UE1).
and/or wherein
- - for the transmission of the third data or
- - for the common transmission of the third and fourth data from the distribution point (DP) to the central unit (CO), a maximum bandwidth is assigned to the third data corresponding to the transmission capacity of the first subscriber line (SL1) between the first decentralized unit (UE1) and the distribution point (DP).

6. Method according to any of the preceding claims, wherein at least one additional subscriber line is used between the central unit (CO) and the distribution point (DP) for commonly transmitting the first and second data and/or the third and fourth data.

7. Method according to any of the preceding claims, wherein
either
- - the first, second, third and fourth data comprise each a narrow band portion, wherein at least one of the narrow band portions are transmitted on the first or second subscriber line (SL1, SL2) or on the at least one additional subscriber line
or
- - the transmission of the first, second, third and/or fourth data is realized dependent on the attenuation and/or cross talk properties of the first and second subscriber line (SL1, SL2) and/or of the at least one additional subscriber line between the central unit (CO) and the distribution point (DP).

8. System for transmitting information, especially in a communications network (10), between a central unit (CO) on the one hand and a first and second decentralized unit (UE1, UE2) on the other hand via a distribution point (DP), wherein the system uses first and second subscriber lines (SL1, SL2) serving the first and second decentralized unit (UE1, UE2) for the transmission of first data from the central unit (CO) to the first decentralized unit (UE1), wherein the system comprises a first multiplex unit provided for merging the first data at the central unit (CO) on the first and second subscriber lines (SL1, SL2) or on the first subscriber line (SL1) and on an additional subscriber line, wherein the first data are transmitted from the central unit (CO) to the distribution point (DP) using the first and second subscriber lines (SL1, SL2) or using the first subscriber line (SL1) and using the additional subscriber line, and wherein the system comprises a second multiplex unit provided for splitting, at the distribution point (DP), the first data on the first subscriber line (SL1) for transmission to the first decentralized unit (UE1).

9. System for transmitting information, especially in a communications network (10), between a central unit (CO) on the one hand and a first and second decentralized unit (UE1, UE2) on the other hand via a distribution point (DP), wherein the system uses first and second subscriber lines (SL1, SL2) serving the first and second decentralized unit (UE1, UE2) for the transmission of first data from the central unit (CO) to the first decentralized unit (UE1) and for the transmission of second data from the central unit (CO) to the second decentralized unit (UE2), wherein the system comprises a first multiplex unit provided for multiplexing the first and second data at the central unit (CO) on the first and second subscriber lines (SL1, SL2), wherein the first and second data are transmitted from the central unit (CO) to the distribution point (DP) using the first and second subscriber lines (SL1, SL2), and wherein the system comprises a second multiplex unit provided for demultiplexing, at the distribution point (DP), the first data on the first subscriber line (SL1) for transmission to the first decentralized unit (UE1) and the second data on the second subscriber line (SL2) for transmission to the second decentralized unit (UE2).

10. System according to claim 8, wherein the first and second subscriber lines (SL1, SL2) serve the first and second decentralized unit (UE1, UE2) for the transmission of third data from the first decentralized unit (UE1) to the central unit (CO), wherein the second multiplex unit is provided for splitting the third data at the distribution point (DP) on the first and second subscriber lines (SL1, SL2) or on the first subscriber line (SL1) and on the additional subscriber line, wherein the third data are transmitted from the distribution point (DP) to the central unit (CO) using the first and second subscriber lines (SL1, SL2) or using the first subscriber line (SL1) and using the additional subscriber line, and wherein the first multiplex unit is provided for merging the third data at the central unit (CO).

11. System according to claim 9, wherein the first and second subscriber lines (SL1, SL2) serve the first and second decentralized unit (UE1, UE2) for the transmission of third data from the first decentralized unit (UE1) to the central unit (CO) and for the transmission of fourth data from the second decentralized unit (UE2) to the central unit (CO), wherein the second multiplex unit is provided for multiplexing the third and fourth data at the distribution point (DP) on the first and second subscriber lines (SL1, SL2), wherein the third and fourth data are commonly transmitted from the distribution point (DP) to the central unit (CO) using the first and second subscriber lines (SL1, SL2), and wherein the first multiplex unit is provided for demultiplexing the third and fourth data at the central unit (CO).

12. Communications network (10) comprising a system for transmitting information according to claim 8 or 9.

13. Communications network (10) according to claim 12, wherein the first and second subscriber lines (SL1, SL2) serve the first and second decentralized unit (UE1, UE2) for the transmission of third data from the first decentralized unit (UE1) to the central unit (CO), wherein the second multiplex unit is provided for splitting the third data at the distribution point (DP) on the first and second subscriber lines (SL1, SL2) or on the first subscriber line (SL1) and an additional subscriber line, wherein the third data are transmitted from the distribution point (DP) to the central unit (CO) using the first and second subscriber lines (SL1, SL2) or using the first subscriber line (SL1) and the additional subscriber line, and wherein the first multiplex unit is provided for merging the third data at the central unit (CO).

14. Communications network (10) according to claim 13, wherein the first and second subscriber lines (SL1, SL2) serve the first and second decentralized unit (UE1, UE2) for the transmission of third data from the first decentralized unit (UE1) to the central unit (CO) and for the transmission of fourth data from the second decentralized unit (UE2) to the central unit (CO), wherein the second multiplex unit is provided for multiplexing the third and fourth data at the distribution point (DP) on the first and second subscriber lines (SL1, SL2), wherein the third and fourth data are commonly transmitted from the distribution point (DP) to the central unit (CO) using the first and second subscriber lines (SL1, SL2), and wherein the first multiplex unit is provided for demultiplexing the third and fourth data at the central unit (CO).

15. Computer program product comprising software code that when executed on a computing system performs a method for transmitting information in a communications network (10) between a central unit (CO) on the one hand and a first and second decentralized unit (UE1, UE2) on the other hand via a distribution point (DP) according to any of claims 1 to 7.

## Patentansprüche

1. Verfahren zum Übertragen von Informationen in einem Kommunikationsnetz (10) zwischen einer Zentraleinheit (CO) einerseits und einer ersten und zweiten dezentralisierten Einheit (UE1, UE2) andererseits über einen Verteilungspunkt (DP), wobei das Kommunikationsnetz (10) eine erste und zweite Teilnehmerleitung (SL1, SL2) umfasst, die die erste und zweite dezentralisierte Einheit (UE1, UE2) für die Übertragung von ersten Daten von der Zentraleinheit (CO) zu der ersten dezentralisierten Einheit (UE1) und für die Übertragung von zweiten Daten von der Zentraleinheit (CO) zu der zweiten dezentralisierten Einheit (UE2) versorgen, wobei das Verfahren die folgenden Schritte umfasst:
- - Aufteilen der ersten Daten in der Zentraleinheit (CO),
- - Übertragen der ersten Daten von der Zentraleinheit (CO) zu dem Verteilungspunkt (DP) unter Verwendung der ersten und zweiten Teilnehmerleitung (SL1, SL2) oder unter Verwendung der ersten Teilnehmerleitung (SL1) und der zusätzlichen Teilnehmerleitung und
- - Zusammenführen der ersten Daten auf der ersten Teilnehmerleitung (SL1) in dem Verteilungspunkt (DP) zur Übertragung zur ersten dezentralisierten Einheit (UE1).

2. Verfahren nach Anspruch 1, wobei die erste und zweite Teilnehmerleitung (SL1, SL2) die erste und zweite dezentralisierte Einheit (UE1, UE2) für die Übertragung von dritten Daten von der ersten dezentralisierten Einheit (UE1) zu der Zentraleinheit (CO) und für die Übertragung von vierten Daten von der zweiten dezentralisierten Einheit (UE2) zu der Zentraleinheit (CO) versorgen, wobei das Verfahren ferner die folgenden Schritte umfasst:
- - Aufteilen der dritten Daten in dem Verteilungspunkt (DP),
- - Übertragen der dritten Daten von dem Verteilungspunkt (DP) zu der Zentraleinheit (CO) unter Verwendung der ersten und zweiten Teilnehmerleitung (SL1, SL2) oder unter Verwendung der ersten Teilnehmerleitung (SL1) und der zusätzlichen Teilnehmerleitung und
- - Zusammenführen der dritten Daten in der Zentraleinheit (CO).

3. Verfahren zum Übertragen von Informationen in einem Kommunikationsnetz (10) zwischen einer Zentraleinheit (CO) einerseits und einer ersten und zweiten dezentralisierten Einheit (UE1, UE2) andererseits über einen Verteilungspunkt (DP), wobei das Kommunikationsnetz (10) eine erste und zweite Teilnehmerleitung (SL1, SL2) umfasst, die die erste und zweite dezentralisierte Einheit (UE1, UE2) für die Übertragung von ersten Daten von der Zentraleinheit (CO) zu der ersten dezentralisierten Einheit (UE1) und für die Übertragung von zweiten Daten von der Zentraleinheit (CO) zu der zweiten dezentralisierten Einheit (UE2) versorgen, wobei das Verfahren die folgenden Schritte umfasst:
- - Multiplexen der ersten und zweiten Daten in der Zentraleinheit (CO),
- - gemeinsames Übertragen der gemultiplexten ersten und zweiten Daten von der Zentraleinheit (CO) zu dem Verteilungspunkt (DP) unter Verwendung der ersten und zweiten Teilnehmerleitung (SL1, SL2) und
- - Demultiplexen der ersten Daten zur Übertragung zu der ersten dezentralisierten Einheit (UE1) und der zweiten Daten zur Übertragung zu der zweiten dezentralisierten Einheit (UE2) in dem Verteilungspunkt (DP).

4. Verfahren nach Anspruch 3, wobei die erste und zweite Teilnehmerleitung (SL1, SL2) die erste und zweite dezentralisierte Einheit (UE1, UE2) für die Übertragung von dritten Daten von der ersten dezentralisierten Einheit (UE1) zu der Zentraleinheit (CO) und für die Übertragung von vierten Daten von der zweiten dezentralisierten Einheit (UE2) zu der Zentraleinheit (CO) versorgen, wobei das Verfahren ferner die folgenden Schritte umfasst:
- - Multiplexen der dritten und vierten Daten in dem Verteilungspunkt (DP) auf der ersten und zweiten Teilnehmerleitung (SL1, SL2),
- - gemeinsames Übertragen der gemultiplexten dritten und vierten Daten von dem Verteilungspunkt (DP) zu der Zentraleinheit CO) unter Verwendung der ersten und zweiten Teilnehmerleitung (SL1, SL2) und
- - Demultiplexen der dritten und vierten Daten in der Zentraleinheit (CO).

5. Verfahren nach einem der vorhergehenden Ansprüche, wobei
- - für die Übertragung der ersten Daten oder
- - für die gemeinsame Übertragung der ersten und zweiten Daten von der Zentraleinheit (CO) zu dem Verteilungspunkt (DP) eine maximale Bandbreite an die ersten Daten vergeben wird, die der Übertragungskapazität der ersten Teilnehmerleitung (SL1) zwischen dem Verteilungspunkt (DP) und der ersten dezentralisierten Einheit (UE1) entspricht, und/oder wobei
- - für die Übertragung der dritten Daten oder
- - für die gemeinsame Übertragung der dritten und vierten Daten von dem Verteilungspunkt (DP) zu der Zentraleinheit (CO) eine maximale Bandbreite an die dritten Daten vergeben wird, die der Übertragungskapazität der ersten Teilnehmerleitung (SL1) zwischen der ersten dezentralisierten Einheit (UE1) und dem Verteilungspunkt (DP) entspricht.

6. Verfahren nach einem der vorhergehenden Ansprüche, wobei mindestens eine zusätzliche Teilnehmerleitung zwischen der Zentraleinheit (CO) und dem Verteilungspunkt (DP) zum gemeinsamen Übertragen der ersten und zweiten Daten und/oder der dritten und vierten Daten verwendet wird.

7. Verfahren nach einem der vorhergehenden Ansprüche, wobei
entweder
- - die ersten, zweiten, dritten und vierten Daten jeweils einen Schmalbandteil umfassen, wobei mindestens einer der Schmallbandteile auf der ersten oder zweiten Teilnehmerleitung (SL1, SL2) oder auf der mindestens einen zusätzlichen Teilnehmerleitung übertragen wird, oder
- - die Übertragung der ersten, zweiten, dritten und/oder vierten Daten abhängig von den Dämpfungsund/oder Übersprecheigenschaften der ersten und zweiten Teilnehmerleitung (SL1, SL2) und/oder der mindestens einen zusätzlichen Teilnehmerleitung zwischen der Zentraleinheit (CO) und dem Verteilungspunkt (DP) realisiert wird.

8. System zum Übertragen von Informationen insbesondere in einem Kommunikationsnetz (10) zwischen einer Zentraleinheit (CO) einerseits und einer ersten und zweiten dezentralisierten Einheit (UE1, UE2) andererseits über einen Verteilungspunkt (DP), wobei das System eine erste und zweite Teilnehmerleitung (SL1, SL2) verwendet, die die erste und zweite dezentralisierte Einheit (UE1, UE2) für die Übertragung von ersten Daten von der Zentraleinheit (CO) zu der ersten dezentralisierten Einheit (UE1) versorgen, wobei das System eine erste Multiplexeinheit umfasst, die zum Zusammenführen der ersten Daten in der Zentraleinheit (CO) auf der ersten und zweiten Teilnehmerleitung (SL1, SL2) oder auf der ersten Teilnehmerleitung (SL1) und auf einer zusätzlichen Teilnehmerleitung vorgesehen ist, wobei die ersten Daten unter Verwendung der ersten und zweiten Teilnehmerleitung (SL1, SL2) oder unter Verwendung der ersten Teilnehmerleitung (SL1) und unter Verwendung der zusätzlichen Teilnehmerleitung von der Zentraleinheit (CO) zu dem Verteilungspunkt (DP) übertragen werden und wobei das System eine zweite Multiplexeinheit umfasst, die zum Aufteilen der ersten Daten auf der ersten Teilnehmerleitung (SL1) zur Übertragung zu der ersten dezentralisierten Einheit (UE1) in dem Verteilungspunkt (DP) vorgesehen ist.

9. System zum Übertragen von Informationen insbesondere in einem Kommunikationsnetz (10) zwischen einer Zentraleinheit (CO) einerseits und einer ersten und zweiten dezentralisierten Einheit (UE1, UE2) andererseits über einen Verteilungspunkt (DP), wobei das System eine erste und zweite Teilnehmerleitung (SL1, SL2) verwendet, die die erste und zweite dezentralisierte Einheit (UE1, UE2) für die Übertragung von ersten Daten von der Zentraleinheit (CO) zu der ersten dezentralisierten Einheit (UE1) und für die Übertragung von zweiten Daten von der Zentraleinheit (CO) zu der zweiten dezentralisierten Einheit (UE2) versorgen, wobei das System eine erste Multiplexeinheit umfasst, die zum Multiplexen der ersten und zweiten Daten in der Zentraleinheit (CO) auf der ersten und zweiten Teilnehmerleitung (SL1, SL2) vorgesehen ist, wobei die ersten und zweiten Daten unter Verwendung der ersten und zweiten Teilnehmerleitung (SL1, SL2) von der Zentraleinheit (CO) zu dem Verteilungspunkt (DP) übertragen werden und wobei das System eine zweite Multiplexeinheit umfasst, die zum Demultiplexen der ersten Daten auf der ersten Teilnehmerleitung (SL1) zur Übertragung zu der ersten dezentralisierten Einheit (UE1) und der zweiten Daten auf der zweiten Teilnehmerleitung (SL2) zur Übertragung zu der zweiten dezentralisierten Einheit (UE2) in dem Verteilungspunkt (DP) vorgesehen ist.

10. System nach Anspruch 8, wobei die erste und zweite Teilnehmerleitung (SL1, SL2) die erste und zweite dezentralisierte Einheit (UE1, UE2) für die Übertragung von dritten Daten von der ersten dezentralisierten Einheit (UE1) zu der Zentraleinheit (CO) versorgen, wobei die zweite Multiplexeinheit zum Aufteilen der dritten Daten in dem Verteilungspunkt (DP) auf der ersten und zweiten Teilnehmerleitung (SL1, SL2) oder auf der ersten Teilnehmerleitung (SL1) und auf der zusätzlichen Teilnehmerleitung vorgesehen ist, wobei die dritten Daten unter Verwendung der ersten und zweiten Teilnehmerleitung (SL1, SL2) oder unter Verwendung der ersten Teilnehmerleitung (SL1) und unter Verwendung der zusätzlichen Teilnehmerleitung von dem Verteilungspunkt (DP) zu der Zentraleinheit (CO) übertragen werden und wobei die erste Multiplexeinheit zum Zusammenführen der dritten Daten in der Zentraleinheit (CO) vorgesehen ist.

11. System nach Anspruch 9, wobei die erste und zweite Teilnehmerleitung (SL1, SL2) die erste und zweite dezentralisierte Einheit (UE1, UE2) für die Übertragung von dritten Daten von der ersten dezentralisierten Einheit (UE1) zu der Zentraleinheit (CO) und für die Übertragung von vierten Daten von der zweiten, dezentralisierten Einheit (UE2) zu der Zentraleinheit (CO) versorgen, wobei die zweite Multiplexeinheit zum Multiplexen der dritten und vierten Daten in dem Verteilungspunkt (DP) auf der ersten und zweiten Teilnehmerleitung (SL1, SL2) vorgesehen ist, wobei die dritten und vierten Daten unter Verwendung der ersten und zweiten Teilnehmerleitung (SL1, SL2) von dem Verteilungspunkt (DP) zu der Zentraleinheit (CO) allgemein übertragen werden und wobei die erste Multiplexeinheit zum Demultiplexen der dritten und vierten Daten in der Zentraleinheit (CO) vorgesehen ist.

12. Kommunikationsnetz (10), das ein System zum Übertragen von Informationen nach Anspruch 8 oder 9 umfasst.

13. Kommunikationsnetz (10) nach Anspruch 12, wobei die erste und zweite Teilnehmerleitung (SL1, SL2) die erste und zweite dezentralisierte Einheit (UE1, UE2) für die Übertragung von dritten Daten von der ersten dezentralisierten Einheit (UE1) zu der Zentraleinheit (CO) versorgen, wobei die zweite Multiplexeinheit zum Aufteilen der dritten Daten in dem Verteilungspunkt (DP) auf der ersten und zweiten Teilnehmerleitung (SL1, SL2) oder auf der ersten Teilnehmerleitung (SL1) und einer zusätzlichen Teilnehmerleitung vorgesehen ist, wobei die dritten Daten unter Verwendung der ersten und zweiten Teilnehmerleitung (SL1, SL2) oder unter Verwendung der ersten Teilnehmerleitung (SL1) und der zusätzlichen Teilnehmerleitung von dem Verteilungspunkt (DP) zu der Zentraleinheit (CO) übertragen werden und wobei die erste Multiplexeinheit zum Zusammenführen der dritten Daten in der Zentraleinheit (CO) vorgesehen ist.

14. Kommunikationsnetz (10) nach Anspruch 12, wobei die erste und zweite Teilnehmerleitung (SL1, SL2) die erste und zweite dezentralisierte Einheit (UE1, UE2) für die Übertragung von dritten Daten von der ersten dezentralisierten Einheit (UE1) zu der Zentraleinheit (CO) und für die Übertragung von vierten Daten von der zweiten dezentralisierten Einheit (UE2) zu der Zentraleinheit (CO) versorgen, wobei die zweite Multiplexeinheit zum Multiplexen der dritten und vierten Daten in dem Verteilungspunkt (DP) auf der ersten und zweiten Teilnehmerleitung (SL1, SL2) vorgesehen ist, wobei die dritten und vierten Daten unter Verwendung der ersten und zweiten Teilnehmerleitung (SL1, SL2) von dem Verteilungspunkt (DP) zu der Zentraleinheit (CO) allgemein übertragen werden und wobei die erste Multiplexeinheit zum Demultiplexen der dritten und vierten Daten in der Zentraleinheit (CO) vorgesehen ist.

15. Computerprogrammprodukt, das Softwarecode umfasst, der, wenn er auf einem Datenverarbeitungssystem ausgeführt wird, ein Verfahren zum Übertragen von Informationen in einem Kommunikationsnetz (10) zwischen einer Zentraleinheit (CO) einerseits und einer ersten und zweiten dezentralisierten Einheit (UE1, UE2) andererseits über einen Verteilungspunkt (DP) nach einem der Ansprüche 1 bis 7 ausführt.

## Revendications

1. Procédé de transmission d'informations dans un réseau de communications (10) entre une unité centrale (CO) d'une part et une première et une seconde unité décentralisée (UE1, UE2) d'autre part par l'intermédiaire d'un point de distribution (DP), dans lequel le réseau de communications (10) comprend des première et seconde lignes d'abonné (SL1, SL2) desservant la première et la seconde unité décentralisée (UE1, UE2) pour la transmission de premières données par l'unité centrale (CO) à la première unité décentralisée (UE1) et pour la transmission de deuxièmes données par l'unité centrale (CO) à la seconde unité décentralisée (UE2), le procédé comprenant les étapes suivantes :
- la division des premières données au niveau de l'unité centrale (CO),
- la transmission des premières données par l'unité centrale (CO) au point de distribution (DP) en utilisant les première et seconde lignes d'abonné (SL1, SL2) ou en utilisant la première ligne d'abonné (SL1) et la ligne d'abonné supplémentaire, et
- la fusion au niveau du point de distribution (DP) des premières données sur la première ligne d'abonné (SL1) pour leur transmission à la première unité décentralisée (UE1).

2. Procédé selon la revendication 1, dans lequel les première et seconde lignes d'abonné (SL1, SL2) desservent la première et la seconde unité décentralisée (UE1, UE2) pour la transmission de troisièmes données par la première unité décentralisée (UE1) à l'unité centrale (CO) et pour la transmission de quatrièmes données par la seconde unité décentralisée (UE2) à l'unité centrale (CO), le procédé comprenant en outre les étapes consistant en :
- la division des troisièmes données au niveau du point de distribution (DP),
- la transmission des troisièmes données par le point de distribution (DP) à l'unité centrale (CO) en utilisant les première et seconde lignes d'abonné (SL1, SL2) ou en utilisant la première ligne d'abonné (SL1) et la ligne d'abonné supplémentaire, et
- la fusion des troisièmes données au niveau de l'unité centrale (CO).

3. Procédé de transmission d'informations dans un réseau de communications (10) entre une unité centrale (CO) d'une part et une première et une seconde unité décentralisée (UE1, UE2) d'autre part par l'intermédiaire d'un point de distribution (DP), dans lequel le réseau de communications (10) comprend des première et seconde lignes d'abonné (SL1, SL2) desservant la première et la seconde unité décentralisée (UE1, UE2) pour la transmission de premières données par l'unité centrale (CO) à la première unité décentralisée (UE1) et pour la transmission de deuxièmes données par l'unité centrale (CO) à la seconde unité décentralisée (UE2), le procédé comprenant les étapes suivantes :
- le multiplexage des premières et deuxièmes données au niveau de l'unité centrale (CO),
- la transmission commune des premières et deuxièmes données multiplexées par l'unité centrale (CO) au point de distribution (DP) en utilisant les première et seconde lignes d'abonné (SL1, SL2), et
- le démultiplexage au niveau du point de distribution (DP) des premières données pour leur transmission à la première unité décentralisée (UE1) et des deuxièmes données pour leur transmission à la seconde unité décentralisée (UE2).

4. Procédé selon la revendication 3, dans lequel les première et seconde lignes d'abonné (SL1, SL2) desservent la première et la seconde unité décentralisée (UE1, UE2) pour la transmission de troisièmes données par la première unité décentralisée (UE1) à l'unité centrale (CO) et pour la transmission de quatrièmes données par la seconde unité décentralisée (UE2) à l'unité centrale (CO), le procédé comprenant en outre les étapes consistant en :
- le multiplexage des troisièmes et quatrièmes données au niveau du point de distribution (DP) sur les première et seconde lignes d'abonné (SL1, SL2),
- la transmission commune des troisièmes données et quatrièmes données multiplexées par le point de distribution (DP) à l'unité centrale (CO) en utilisant les première et seconde lignes d'abonné (SL1, SL2), et
- le démultiplexage des troisièmes et quatrièmes données au niveau de l'unité centrale (CO).

5. Procédé selon l'une quelconque des revendications précédentes, dans lequel
- pour la transmission des premières données ou
- pour la transmission commune des premières et deuxièmes données
par l'unité centrale (CO) au point de distribution (DP), une largeur de bande maximum est attribuée aux premières données correspondant à la capacité de transmission de la première ligne d'abonné (SL1) entre le point de distribution (DP) et la première unité décentralisée (UE1),
et/ou dans lequel
- pour la transmission des troisièmes données ou
- pour la transmission commune des troisièmes et quatrièmes données
par le point de distribution (DP) à l'unité centrale (CO), une largeur de bande maximum est attribuée aux troisièmes données correspondant à la capacité de transmission de la première ligne d'abonné (SL1) entre la première unité décentralisée (UE1) et le point de distribution (DP).

6. Procédé selon l'une quelconque des revendications précédentes, dans lequel au moins une ligne d'abonné supplémentaire est utilisée entre l'unité centrale (CO) et le point de distribution (DP) pour transmettre en commun les premières et deuxièmes données et/ou les troisièmes et quatrièmes données.

7. Procédé selon l'une quelconque des revendications précédentes, dans lequel
soit
- les premières, deuxièmes, troisièmes et quatrièmes données comprennent chacune une partie de bande étroite, au moins l'une des parties de bande étroite étant transmise sur la première ou la seconde ligne d'abonné (SL1, SL2) ou sur l'au moins une ligne d'abonné supplémentaire soit
- la transmission des premières, deuxièmes, troisièmes et/ou quatrièmes données est réalisée en fonction des propriétés d'atténuation et/ou de diaphonie des première et seconde lignes d'abonné (SL1, SL2) et/ou de l'au moins une ligne d'abonné supplémentaire entre l'unité centrale (CO) et le point de distribution (DP).

8. Système de transmission d'informations, particulièrement dans un réseau de communications (10), entre une unité centrale (CO) d'une part et une première et une seconde unité décentralisée (UE1, UE2) d'autre part par l'intermédiaire d'un point de distribution (DP), le système utilisant des première et seconde lignes d'abonné (SL1, SL2) desservant la première et la seconde unité décentralisée (UE1, UE2) pour la transmission de premières données par l'unité centrale (CO) à la première unité décentralise (UE1), le système comprenant une première unité de démultiplexage fournie pour fusionner les premières données au niveau de l'unité centrale (CO) sur les première et seconde lignes d'abonné (SL1, SL2) ou sur la première ligne d'abonné (SL1) et une ligne d'abonné supplémentaire, dans lequel les premières données sont transmises par l'unité centrale (CO) au point de distribution (DP) en utilisant les première et seconde lignes d'abonné (SL1, SL2) ou en utilisant la première ligne d'abonné (SL1) et en utilisant la ligne d'abonné supplémentaire, et dans lequel le système comprend une seconde unité de démultiplexage fournie pour diviser au niveau du point de distribution (DP) les premières données sur la première ligne d'abonné (SL1) pour leur transmission à la première unité décentralisée (UE1).

9. Système de transmission d'informations, particulièrement dans un réseau de communications (10), entre une unité centrale (CO) d'une part et une première et une seconde unité décentralisée (UE1, UE2) d'autre part par l'intermédiaire d'un point de distribution (DP), le système utilisant des première et seconde lignes d'abonné (SL1, SL2) desservant la première et la seconde unité décentralisée (UE1, UE2) pour la transmission de premières données par l'unité centrale (CO) à la première unité décentralisée (UE1) et pour la transmission de deuxièmes données par l'unité centrale (CO) à la seconde unité décentralisée (UE2), le système comprenant une première unité de multiplexage fournie pour multiplexer les premières et deuxièmes données au niveau de l'unité centrale (CO) sur les première et seconde lignes d'abonné (SL1, SL2), dans lequel les premières et deuxièmes données sont transmises par l'unité centrale (CO) au point de distribution (DP) en utilisant les première et seconde lignes d'abonné (SL1, SL2), et le système comprenant une seconde unité de multiplexage fournie pour démultiplexer au niveau du point de distribution (DP) les premières données sur la première ligne d'abonné (SL1) pour leur transmission à la première unité décentralisée (UE1) et les deuxièmes données sur la seconde ligne d'abonné (SL2) pour leur transmission à la seconde unité décentralisée (UE2).

10. Système selon la revendication 8, dans lequel les première et seconde lignes d'abonné (SL1, SL2) desservent la première et la seconde unité décentralisée (UE1, UE2) pour la transmission de troisièmes données par la première unité décentralisée (UE1) à l'unité centrale (CO), dans lequel la seconde unité de multiplexage est fournie pour diviser les troisièmes données au point de distribution (DP) sur les première et seconde lignes d'abonné (SL1, SL2) ou sur la première ligne d'abonné (SL1) et la ligne d'abonné supplémentaire, dans lequel les troisièmes données sont transmises par le point de distribution (DP) à l'unité centrale (CO) en utilisant les première et seconde lignes d'abonné (SL1, SL2) ou en utilisant la première ligne d'abonné (SL1) et la ligne d'abonné supplémentaire, et dans lequel la première unité de multiplexage est fournie pour fusionner les troisièmes données au niveau de l'unité centrale (CO).

11. Système selon la revendication 9, dans lequel les première et seconde lignes d'abonné (SL1, SL2) desservent la première et la seconde unité décentralisée (UE1, UE2) pour la transmission de troisièmes données par la première unité décentralisée (UE1) à l'unité centrale (CO) et pour la transmission de quatrièmes données par la seconde unité décentralisée (UE2) à l'unité centrale (CO), dans lequel la seconde unité de multiplexage est fournie pour multiplexer les troisièmes et quatrièmes données au niveau du point de distribution (DP) sur les première et seconde lignes d'abonné (SL1, SL2), dans lequel les troisièmes et quatrièmes données sont transmises en commun par le point de distribution (DP) à l'unité centrale (CO) en utilisant les première et seconde lignes d'abonné (SL1, SL2), et dans lequel la première unité de multiplexage est fournie pour démultiplexer les troisièmes et quatrièmes données au niveau de l'unité centrale (CO).

12. Réseau de communications (10) comprenant un système de transmission d'informations selon la revendication 8 ou 9.

13. Réseau de communications (10) selon la revendication 12, dans lequel les première et seconde lignes d'abonné (SL1, SL2) desservent la première et la seconde unité décentralisée (UE1, UE2) pour la transmission de troisièmes données par la première unité décentralisée (UE1) à l'unité centrale (CO), dans lequel la seconde unité de multiplexage est fournie pour diviser les troisièmes données au point de distribution (DP) sur les première et seconde lignes d'abonné (SL1, SL2) ou sur la première ligne d'abonné (SL1) et une ligne d'abonné supplémentaire, dans lequel les troisièmes données sont transmises par le point de distribution (DP) à l'unité centrale (CO) en utilisant les première et seconde lignes d'abonné (SL1, SL2) ou en utilisant la première ligne d'abonné (SL1) et la ligne d'abonné supplémentaire, et dans lequel la première unité de multiplexage est fournie pour fusionner les troisièmes données au niveau de l'unité centrale (CO).

14. Réseau de communications (10) selon la revendication 13, dans lequel les première et seconde lignes d'abonné (SL1, SL2) desservent la première et la seconde unité décentralisée (UE1, UE2) pour la transmission de troisièmes données par la première unité décentralisée (UE1) à l'unité centrale (CO) et pour la transmission de quatrièmes données par la seconde unité décentralisée (UE2) à l'unité centrale (CO), dans lequel la seconde unité de multiplexage est fournie pour multiplexer les troisièmes et quatrièmes données au niveau du point de distribution (DP) sur les première et seconde lignes d'abonné (SL1, SL2), dans lequel les troisièmes et quatrièmes données sont transmises en commun par le point de distribution (DP) à l'unité centrale (CO) en utilisant les première et seconde lignes d'abonné (SL1, SL2), et dans lequel la première unité de multiplexage est fournie pour démultiplexer les troisièmes et quatrièmes données au niveau de l'unité centrale (CO).

15. Produit de programme informatique comprenant un code logiciel qui, lorsqu'il est exécuté sur un système informatique exécute un procédé pour transmettre des informations dans un réseau de communications (10) entre une unité centrale (CO) d'une part et une première et une seconde unité décentralisée (UE1, UE2) d'autre part par l'intermédiaire d'un point de distribution (DP) selon l'une quelconque des revendications 1 à 7.
